# EUROPÄISCHE PATENTSCHRIFT

(11) **EP 1 262 452 B1**
(45) Veröffentlichungstag und Bekanntmachung des Hinweises auf die Patenterteilung: **24.05.2006**
(21) Anmeldenummer: 02010245.5
(22) Anmeldetag: 17.05.2002
(51) Int. Cl.: C01B 25/00, C08K 9/10, C08K 9/02, C08K 9/04

(54) **Mikroverkapselter roter Phosphor**
Microencapsulated red phosphore
Phosphore rouge microencapsulé

(30) Priorität: 01.06.2001 DE 10126760
(43) Veröffentlichungstag der Anmeldung: 04.12.2002
(73) Patentinhaber: LANXESS Deutschland GmbH, 51369 Leverkusen (DE)
(72) Erfinder: Wagner, Michael, Dr., 47443 Moers (DE); Podszun, Wolfgang, Dr., 51061 Köln (DE); Peerlings, Henricus, Dr., 42699 Solingen (DE)

(56) Entgegenhaltungen:
- EP-A- 0 763 566
- WO-A-87/00187
- US-A- 4 698 215

## Beschreibung

Die vorliegende Erfindung betrifft partikelförmigen mikroverkapselten roten Phosphor, ein Verfahren zur Herstellung dieses mikroverkapselten roten Phosphors und dessen Verwendung als Flammschutzmittel in Kunststoffen, insbesondere in Thermoplasten.

Die Verwendung von fein gemahlenem rotem Phosphor zur Flammschutzausrüstung von Kunststoffen ist lange bekannt. So beschreibt die DE-A 1 931 387 selbstverlöschende, glasfaserverstärkte Polyamide, die roten Phosphor als Flammschutzmittel enthalten. Roter Phosphor bietet z.B. gegenüber Halogenverbindungen als Flammschutzmittel neben der Halogenfreiheit weitere Vorteile, wie z.B. eine geringere notwendige Einsatzmenge und keine bzw. deutlich reduzierte Beeinträchtigung der mechanischen und elektrischen Eigenschaften der ausgerüsteten Kunststoffe.

Die Verarbeitung von rotem Phosphor ist allerdings unter Sicherheitsaspekten erschwert. Roter Phosphor ist in sehr feiner Verteilung leicht entzündlich. In Anwesenheit von Feuchtigkeit und Luftsauerstoff bildet er bei erhöhter Temperatur stark giftigen Phosphorwasserstoff, der sich an der Luft selbst entzünden kann.

Es hat nicht an Versuchen gefehlt, die Schwierigkeiten, die bei der Verarbeitung von feinteiligem rotem Phosphor auftreten, zu vermindern.

Die Stabilisierung von rotem Phosphor durch Ausfällen einer Hülle aus Siliziumdioxid wird in der DE-A 19 619 701 beschrieben.

Roter Phosphor, der mit Phenol-Formaldehydharz umhüllt ist, ist aus der DE-A 2 625 673 bekannt.

Die EP-A 052 217 beschreibt ein Verfahren zur Stabilisierung von rotem Phosphor durch Verkapselung mit Melaminharz.

In der WO 87/00187 wird die Verkapselung von Flammschutzmitteln, darunter auch roter Phosphor, mit einer Harnstoff-Resorcin-Formaldehyd-Membran beschrieben.

Ein stabilisiertes Pulver von rotem Phosphor, bei dem die Partikel mit einer ersten Hülle aus Aluminiumhydroxid und einer zweiten Hülle aus Harnstoff-Melamin-Phenol-Formaldehyd-Harz beschichtet sind, wird in der EP-A 195 131 beschrieben. In diesem aufwendigen Verkapselungsverfahren müssen die Hüllen in getrennten Arbeitschritten aufgebracht werden.

Obwohl Methoden zur Mikroverkapselung von rotem Phosphor und die nach diesen Methoden erhaltenen Produkte vorbeschrieben sind, ist die Phosphinfreisetzung immer noch hoch. Die bekannten mikroverkapselten Produkte haben zudem den Nachteil, dass die mechanische Festigkeit der Umhüllung nicht in allen Fällen ausreichend ist. Dies hat zur Folge, dass die Hülle eines mikroverkapselten Produkts nach einer mechanischen Beanspruchung wie sie in Förder- und Dosiereinrichtungen auftreten kann, geschädigt wird, so dass der rote Phosphor nicht mehr ausreichend geschützt wird.

Es wurde nun ein partikelförmiger, mikroverkapselter roter Phosphor mit verbesserter mechanischer Festigkeit und reduzierter Phosphinfreisetzung gefunden, der Gegenstand der vorliegenden Erfindung ist, und der dadurch gekennzeichnet ist, dass die Kapselwand aus einer Hülle aus einer Kombination von Harnstoff-Formaldehyd-Harz und Siliziumdioxid besteht.

Ein weiterer Vorteil der vorliegenden Erfindung besteht darin, dass sich die Verkapselung in einem Schritt ohne die Isolierung von Zwischenstufen durchführen lässt.

Ein weiterer Gegenstand der Erfindung ist ein Verfahren zur Mikroverkapselung von rotem Phosphor in wässriger Suspension, welches dadurch gekennzeichnet ist, dass in einer Eintopfreaktion Harnstoff-Formaldehyd-Harz und Siliziumdioxid aus wasserlöslichen Vorprodukten in Anwesenheit von in Wasser dispergiertem rotem Phosphor durch pH-Wert-Absenkung erzeugt wird.

Der erfindungsgemäße mikroverkapselte rote Phosphor ist zur Flammschutzausrüstung von Kunststoffen hervorragend geeignet. Er besitzt eine leichte Verarbeitbarkeit und eine gute Verträglichkeit mit üblichen Kunststoffen. Dabei lässt er sich besonders sicher und leicht unter den üblichen Bedingungen der Kunststoffverarbeitung in die Thermoplasten einarbeiten.

Der mikroverkapselte rote Phosphor besteht aus Partikeln, die im wesentlichen eine Kernhüllenstruktur aufweisen. Der Gewichtsanteil des Phosphorkerns beträgt dabei 50 bis 99 Gew.-%, der Anteil der Hülle 1 bis 50 Gew.-%, vorzugsweise 5 bis 25 Gew.-%. Das Verhältnis von Harnstoff-Formaldehyd-Harz zu Siliziumdioxid in der Hülle beträgt 95 : 5 bis 5 : 95, vorzugsweise 90 : 10 bis 10 : 90, besonders bevorzugt 80 : 20 bis 20 : 80.

Unter rotem Phosphor sind im vorliegenden Zusammenhang alle farbigen allotropen Formen des Phosphors in feinverteilter Form zu verstehen. Die Partikel haben dabei eine mittlere Teilchengröße von 0,1 bis 100 µm, vorzugsweise 0,2 bis 50 µm, besonders bevorzugt 10 bis 50 µm. Die Teilchengröße des Phosphors kann durch Mahlung, insbesondere durch Nassmahlung mit Kugelmühlen oder Perlmühlen eingestellt werden. Als Mahlmedium sind sowohl Wasser als auch organische Lösungsmittel wie z.B. Toluol, Mineralöl, Dimethylformamid, Dimethyacetamid und Ameisensäure geeignet.

Erfindungsgemäß wird unter Harnstoff-Formaldehyd-Harz ein wasserunlösliches Harz verstanden, welches durch Kondensation von Harnstoff und Formaldehyd und gegebenenfalls weiterer kondensationsfähiger Komponenten entstanden ist. Als weitere kondensationsfähige Komponenten kommen dabei Melamin, Hexamethylentetramin und Phenole, insbesondere Resorcin in Betracht.

Im Rahmen der vorliegenden Erfindung schließt die Bezeichnung Siliziumdioxid neben reinem Siliziumdioxid auch wasserunlösliche Silizium-Sauerstoffverbindungen mit OH-Gruppen ein.

Die erfindungsgemäße Hülle kann neben Harnstoff-Formaldehydharz und Siliziumdioxid weitere Bestandteile wie zum Beispiel Pigmente und Stabilisatoren enthalten. So kann ein Anteil von Titandioxid als stark deckendes Weißpigment die rote Eigenfarbe des Phosphors in gewissem Umfang überdecken.

Die Herstellung des erfindungsgemäßen mikroverkapselten roten Phosphors erfolgt in der Weise, dass partikelförmiger roter Phosphor mit einer mittleren Teilchengröße von bevorzugt 0,1 bis 100 µm in einer wässrigen Phase, die Harnstoff, Formaldehyd und gegebenenfalls eine oder mehrere der oben genannten weiteren kondensationsfähigen Komponenten sowie ein wasserlösliches Siliziumdioxid-Vorprodukt enthält, bei einem pH-Wert von 6 - 13 dispergiert wird und dann durch Zusatz einer starken Säure der pH-Wert auf bevorzugt 0 - 5 abgesenkt wird. Als wasserlösliche Siliziumdioxid-Vorprodukte sind Alkalisilikate, sowie Wasserglas insbesondere Natriumwasserglas und Kaliumwasserglas geeignet. Des Weiteren können vorzugsweise partiell hydrolisierte Tetraalkoxysilane wie Tetramethoxysilan und Tetraethoxysilan verwendet werden. Zur Einstellung des sauren pH-Wertes sind alle starken Säuren, insbesondere Schwefelsäure, Phosphorsäure und Salzsäure geeignet. Die Dispergierung und der Säurezusatz können beispielsweise im Temperaturbereich von 10 - 90°C, vorzugsweise bei 15 - 60°C, besonders bevorzugt bei Raumtemperatur erfolgen. Nach der Säurezugabe wird das Reaktionsgemisch einige Stunden bei erhöhter Temperatur von vorzugsweise 80 bis 120°C gehalten.

Die Isolierung des mikroverkapselten roten Phosphors aus der Suspension kann in einfacher Weise durch Sedimentieren oder Filtrieren erfolgen. Zur weiteren Reinigung können Waschschritte beispielsweise mit Wasser oder Alkohol angewendet werden.

So ist es vorteilhaft, nach der Verkapselung eine Temperung, beispielsweise bei 100 bis 200°C, durchzuführen. Bei der Temperung wird die Kondensationsreaktion vervollständigt und der Gehalt an OH-Gruppen im Siliziumdioxid reduziert. Es ist möglich, das Pulver direkt zu tempern. Die Temperung kann aber auch in einer hochsiedenden Trägerflüssigkeit, beispielsweise in Diphenylether oder in einem Mineralöl durchgeführt werden.

Der erfindungsgemäße mikroverkapselte rote Phosphor ist leicht und sicher handhabbar. Er neigt nicht zur Freisetzung von Phosphin. Auch nach mechanischer Beanspruchung, beispielsweise nach Transport in Förder- oder Dosiereinrichtungen, bleiben diese positiven Eigenschaften erhalten.

Der erfindungsgemäße mikroverkapselte rote Phosphor eignet sich hervorragend zur Flammfestausrüstung von Kunststoffen bzw. von Blends aus zwei oder mehreren verschiedenen Kunststoffen. Hierzu gehören thermoplastische Kunststoffe wie Homo- und Copolymere von olefinisch ungesättigten Monomeren wie Polyfluorethylene, Polyethylen, Polypropylen, Ethylen/Propylen-Copolymere, Polystyrole, Styrol/Acrylnitril-Copolymere, ABS-Copolymere (Acrylnitril/Butadien/Styrol), Vinyl-Chlorid Homo- und Copolymere, Polyacrylate, insbesondere Polymethylmethacrylat, Vinylacetat-Copolymere, Polyacetale, Polycarbonate, insbesondere Polycarbonate auf der Basis von Bisphenol A und -derivaten, Polyester, Polyamide, d.h. bekannte Homopolyamide, Copolyamide und Mischungen dieser Polyamide. Polyamide und Polyester sind bevorzugt, Polyamide sind besonders bevorzugt.

Die Kunststoffe können verstärkende Füllstoffe, beispielsweise Glasfasern enthalten oder solche Füllstoffe, die den Formkörper bestimmte Merkmale verleihen, beispielsweise als Gleitmittel wirkende Füllstoffe oder inerte Füllstoffe wie Kaolin oder Talk. Weiterhin können die Kunststoffe zahlreiche Zusätze wie Antioxidantien, Hitze- oder Lichtstabilisatoren, Farbstoffe, Pigmente oder andere Funktionsadditive enthalten. Insbesondere können Zusätze in Form von organischen und anorganischen Metallverbindungen enthalten sein. Hierzu zählen Oxide und Sulfide des Zinks, die Oxide und Hydroxide des Magnesiums, Kupferoxid, Eisenoxide, Metallcarbonate wie Calcium- oder Magnesiumcarbonat, insbesondere auch Talcite, Hydrotalcite; Borate, insbesondere Zinkborat, sowie allgemein stöchiometrische Mischungen von Metallverbindungen/oxiden. Weiterhin zählen hierzu Lanthanide und deren Salze, bevorzugt Cer und die enthaltenden Substanzen/Salze wie Ce(II)oxid, CeO₂.

Weiterer Gegenstand der Erfindung ist
- Mikroverkapselter roter Phosphor, wobei das Gewichtsverhältnis von Harnstoff-Formaldehyd-Harz zu Siliziumdioxid in der Kapselwand 95 : 5 bis 5 : 95 beträgt.
- Mikroverkapselter roter Phosphor, dadurch gekennzeichnet, dass das Harnstoff Formaldehyd-Harz aus den Komponenten Harnstoff, Formaldehyd, Resorcin und Hexamethylentertamin aufgebaut ist.
- Mikroverkapselter roter Phosphor, dadurch gekennzeichnet, dass die Kapselwand ein Weißpigment enthält.

Bei Weißpigmenten handelt es sich um Substanzen/Substanzgemische, deren aufhellender optischer Effekt in der Regel auf ihre geringe Lichtabsorption sowie ihr starkes, vorzugsweise unselektives Lichtstreuvermögen zurückzuführen ist. Für den Weißeffekt ist darüber hinaus die Partikelbeschaffenheit bzw. die Partikelgröße von weiterer Bedeutung.

Hierbei kommen hauptsächlich anorganische Pigmente wie Titandioxid, Zinkoxid, Zinksulfid, Bariumsulfat, basisches Bleicarbonat, Bismutchloridoxid oder auch Kieselsäuren und Silikate zur Anwendung.

Unter Umständen kann es auch vorteilhaft sein, die Pigmente in Mischung mit weiteren Hilfsstoffen wie calciniertem, wasserfreiem Kaolin einzusetzen.

Weiterer Gegenstand ist ein Verfahren zur Mikroverkapselung von rotem Phosphor in wässriger Suspension, das dadurch gekennzeichnet ist, dass in einer Eintopfreaktion Harnstoff-Formaldehyd-Harz und Siliziumdioxid aus wasserlöslichen Vorprodukten in Anwesenheit von in Wasser dispergiertem rotem Phosphor durch pH-Wert-Absenkung erzeugt wird.

Weiterer Gegenstand ist die Verwendung von mikroverkapseltem rotem Phosphor als Flammschutzmittel in Kunststoffen und Kunststoffblends, wobei thermoplastische Kunststoffe, insbesondere Polyamide, bevorzugt sind.

Weiterer Gegenstand sind:
- Formmassen enthaltend erfindungsgemäßen mikroverkapselten roten Phosphor.
- Formmassen zusätzlich enthaltend einen oder mehrere Füllstoffe wie Glasfasern und/oder Talkum, wobei Glasfasern besonders bevorzugt sind.
- Formmassen zusätzlich enthaltend eine oder mehrere anorganische oder organische Metallverbindung, Metallsalz und/oder Metallkomplex.
- Formmassen, wobei es sich bei den Metallverbindungen um Substanzen aus den Gruppen der Metalloxide, Metallcarbonate, Metallhydroxide, Metallsulfide, bevorzugt aus der Gruppe der Zink- und Magnesiumsalze wobei Zinkoxid, Zinkfluorid, Zinksulfid, Zinkborat, Magnesiumoxid sowie Magnesiumhydroxid besonders bevorzugt sind, handelt. Weiterhin zählen hierzu Lanthamide und deren Salze, bevorzugt Cer und die enthaltenden Substanzen, Salze wie Ce(IV)oxid, CeO₂. Die genannten Mineralien können auch mit bekannten Mitteln beschichtet sein.

Optional können die erfindungsgemäßen Formmassen noch zusätzlich ein weiteres/weitere Flammschutzmittel enthalten.

Bevorzugt sind hier Formmassen, dadurch gekennzeichnet, dass es sich bei dem zusätzlichen Flammschutzmittel um eine Melaminverbindung, bevorzugt Melamin, besonders bevorzugt Melamincyanurat und/oder eine Organophosphorverbindung und/oder eine weitere halogenfreie Verbindung handelt.

Weiterer Gegenstand der Erfindung sind Formkörper aus den erfindungsgemäßen Formmassen.

Die vorliegende Erfindung soll anhand der folgenden Beispiele näher erläutert werden.

### Beispiel 1

### Mikroverkapselung von rotem Phosphor

0,62 g Harnstoff, 1,18 g Hexamethylentetramin und 3,05 g Recorcin wurden in 150 g Wasser gelöst. In dieser Lösung wurden unter kräftigen Rühren 30 g roter Phosphor homogen verteilt. Die erhaltene Suspension wurde bei 25°C mit 20,7 g 37 %iger Formaldehydlösung und anschließend mit 18 g 35 %iger Natriumwasserglaslösung versetzt. Danach wurden 12 ml 85 %iger Phosphorsäure innerhalb 15 min zugetropft, wobei der pH-Wert auf 1 absank. Das Gemisch wurde anschließend 2 Stunden auf 100°C erhitzt. Danach wurde die Mischung über Nacht stehen gelassen, wobei sich der gebildete mikroverkapselte rote Phosphor absetzte. Der Phosphor wurde abgesaugt und mit Wasser solange gewaschen, bis das Waschwasser neutral war. Die Trocknung erfolgte bei 90°C im Vakuumtrockenschrank. Man erhielt ein pulverförmiges, rieselfähiges Produkt.

### Zur Phosphinbestimmung:

116 mg (entspricht 100 mg Pᵣₒₜ) des nach Beispiel 1 mikroverkapselten roten Phosphors wurden 10 min bei 280°C gelagert und der gebildete Phosphorwasserstoff detektiert.

| **Temperaturbehandlung** | **280°C/10 min** |
|---|---|
| freigesetzte Phosphorwasserstoffmenge | 4 ppm |
| bezogen auf mikroverkaspelten roten Phosphor | |

### (Vergleichsbeispiel)

Mikroverkapselung von rotem Phosphor (doppelte Verkapselung in 2 Schritten) nach EP-A 0 195 13

125 g roter Phosphor wurde in 312,5 ml Wasser suspendiert. Dazu tropft man eine Lösung aus 10 g Al₂(SO₄)₃ * 18 H₂O in Wasser. Nach 10 min Nachrühren bei Raumtemperatur wurde mit einer 10 %igen Natriumcarbonatlösung ein pH-Wert von 8 eingestellt. Dabei fiel Ammoniumhydroxid aus.

Der mit Ammoniumhydroxyd verkapselte rote Phosphor wurde abgesaugt und anschließend mit Wasser solange gewaschen, bis das Waschwasser einen pH-Wert von 7 aufwies.

Der so vorverkapselte rote Phosphor wurde mit Wasser zu einer 40 Gew.-% Dispersion redispergiert. Hierzu tropfte man 7,5 g "Seloform MUF 63" (Harnstoff-Melamin-Phenol-Formaldehyd-Harz, Fa. Chimica Pomponesco S.p.A. of Pomponesco, Man tua, Italien) in 11,5 ml Wasser. Die Mischung wurde bei 80°C für 30 min durch Rühren gut homogenisiert. Dann wurde eine Lösung von 50 mg Ammoniumchlorid als 10 %ige Lösung zugetropft. Die Mischung wurde danach 3 Stunden auf 100°C erhitzt und anschließend nach Abkühlen auf Raumtemperatur abgesaugt. Der umhüllte Phosphor wurde mit Wasser gewaschen und dann im Vakuumtrockenschrank bei 50°C getrocknet.

Man erhielt ein pulverförmiges, rieselfähiges Produkt.

### Zur Phosphinbestimmung:

114mg (entsprechend 100 mg P rot) des nach obiger Vorschrift verkapselten roten Phosphors wurden 10 min bei 280°C gelagert und der gebildete Phosphorwasserstoff detektiert.

| **Temperaturbehandlung** | **280°C/10 min** |
|---|---|
| freigesetzte Phosphorwasserstoffmenge | ca. 10 ppm |

### Beispiel 2

### Mikroverkapselung von rotem Phosphor

1,28 g Harnstoff, 2,46 g Hexamethylentetramin und 6,34 g Resorcin wurden in 312,5 g Wasser gelöst. In dieser Lösung wurden mit Hilfe eines Schnellrührers 125 g roter Phosphor mit einer Teilchengröße von 15-35 µm gleichmäßig verteilt. Die erhaltene Suspension wurde bei 25°C mit 43,2 g 37 %iger Formaldehydlösung und 75 g 35 %iger Natriumwasserglaslösung versetzt. Danach wurde der pH-Wert mit 10 %iger Schwefelsäure auf 1,5 eingestellt. Das Gemisch wurde anschließend 6 Stunden auf 100°C erhitzt. Nach dem Abkühlen wurde das erhaltene Produkt abfiltriert mit Wasser säurefrei gewaschen und bei 80°C getrocknet. Das erhaltene Pulver wurde dann in 250 g Diphenylether aufgeschlämmt und 2 Stunden auf 150°C erwärmt. Danach wurde das Produkt isoliert, mit Alkohol gewaschen und bei 50°C erneut getrocknet. Man erhielt 149 g pulverförmiges, rieselfähiges Produkt.

### Beispiel 3

### Mikroverkapselter roter Phosphor mit heller Eigenfarbe

0,42 Harnstoff, 0,82 g Hexamethylentetramin und 2,12 g Resorcin wurden in 330 g Wasser gelöst. In dieser Lösung wurden unter kräftigem Rühren 20,8 g roter Phosphor mit einer mittleren Teilchengröße von 25 µm homogen verteilt. Die erhaltene Suspension wurde bei 25°C mit 14,4 g 37 %iger Formaldehydlösung und 86,5 g einer 6,6 %iger Natriumwasserglaslösung, in die 6,3 g Titandioxid-Weißpigment mit Hilfe einer Perlmühle eindispergiert worden waren, versetzt. Danach wurden 76 g 85 %iger Phosphorsäure innerhalb von 30 min zugetropft, wobei der pH-Wert auf 1 absank. Das Gemisch wurde anschließend 2 Stunden auf 100°C erhitzt. Danach wurde die Mischung 16 h stehen gelassen, wobei sich der gebildete mikroverkapselte rote Phosphor absetzte. Die überstehende Flüssigkeit wurde abdekantiert und das feuchte Produkt solange mit Wasser gewaschen bis das Waschwasser neutral war. Die Trocknung erfolgte bei 50°C im Vakuumtrockenschrank. Man erhielt 27,5 g pulverförmiges, hellgefärbtes Produkt.

## Patentansprüche

1. Partikelförmiger, mikroverkapselter roter Phosphor, **dadurch gekennzeichnet, dass** die Kapselwand aus einer Hülle aus Harnstoff-Formaldehyd-Harz und Siliziumdioxid besteht.

2. Mikroverkapselter roter Phosphor nach Anspruch 1, **dadurch gekennzeichnet dass** der Gewichtsanteil der Kapselwand 1 bis 50 Gew.-%, bezogen auf die Gewichts-Summe von Phosphor und Kapselwand beträgt.

3. Mikroverkapselter roter Phosphor nach Anspruch 2, **dadurch gekennzeichnet, dass** das Gewichtsverhältnis von Harnstoff-Formaldehyd-Harz zu Siliziumdioxid in der Kapselwand 95 : 5 bis 5 : 95 beträgt.

4. Mikroverkapselter roter Phosphor nach Anspruch 1 bis 3, **dadurch gekennzeichnet, dass** das Harnstoff-Formaldehyd-Harz aus den Komponenten Harnstoff, Formaldehyd, Resorcin und Hexamethylentetramin aufgebaut ist.

5. Mikroverkapselter roter Phosphor nach Anspruch 1 bis 4, **dadurch gekennzeichnet, dass** die Kapselwand ein Weißpigment enthält

6. Verfahren zur Herstellung mikroverkapseltem roten Phosphor gemäß einem oder mehreren der vorangegangenen Ansprüche zur Mikroverkapselung von rotem Phosphor in wässriger Suspension, wobei in einer Eintopfreaktion Harnstoff-Formaldehyd-Harz und Siliziumdioxid aus wasserlöslichen Vorprodukten in Anwesenheit von in Wasser dispergiertem rotem Phosphor durch pH-Wert-Absenkung erzeugt wird.

7. Verwendung von mikroverkapseltem rotem Phosphor gemäß einem oder mehrerer der vorangegangenen Ansprüche als Flammschutzmittel in Kunststoffen und Kunststoffblends, wobei thermoplastische Kunststoffe bevorzugt sind.

8. Formmassen enthaltend mikroverkapselten roten Phosphor gemäß einem oder mehrerer der vorangegangenen Ansprüche.

9. Formmassen nach einem oder mehreren der vorangegangenen Ansprüche enthaltend einen oder mehrere Füllstoffe wie Glasfasern und/oder Talkum, wobei Glasfasern besonders bevorzugt sind.

10. Formmassen nach einem oder mehreren der vorangegangenen Ansprüche enthaltend eine oder mehrere anorganische oder organische Metallverbindung, Metallsalz und/oder Metallkomplex.

11. Formmassen nach einem oder mehreren der vorangegangenen Ansprüche zusätzlich enthaltend ein weiteres/weitere Flammschutzmittel.

12. Formkörper hergestellt aus Formmassen gemäß einem oder mehreren der vorangegangenen Ansprüche.

## Claims

1. Particulate, microencapsulated red phosphorus, **characterized in that** the capsule wall consists of a shell of urea-formaldehyde resin and silicon dioxide.

2. Microencapsulated red phosphorus according to Claim 1, **characterized in that** the weight fraction of the capsule wall is 1 to 50 wt.%, based on the total weight of phosphorus and capsule wall.

3. Microencapsulated red phosphorus according to Claim 2, **characterized in that** the weight ratio of urea-formaldehyde resin to silicon dioxide in the capsule wall is 95:5 to 5:95.

4. Microencapsulated red phosphorus according to Claim 1 to 3, **characterized in that** the urea-formaldehyde resin is constructed from the components urea, formaldehyde, resorcinol and hexamethylenetetramine.

5. Microencapsulated red phosphorus according to Claim 1 to 4, **characterized in that** the capsule wall contains a white pigment.

6. Process for producing microencapsulated red phosphorus according to one or more of the preceding claims for microencapsulation of red phosphorus in aqueous suspension wherein urea-formaldehyde resin and silicon dioxide is produced in a one pot reaction from water-soluble precursors in the presence of water-dispersed red phosphorus by lowering the pH.

7. Use of microencapsulated red phosphorus according to one or more of the preceding claims as a flame retardant in plastics and polyblends wherein thermoplastic materials are preferred.

8. Moulding compositions comprising microencapsulated red phosphorus according to one or more of the preceding claims.

9. Moulding compositions according to one or more of the preceding claims comprising one or more fillers such as glass fibres and/or talcum wherein glass fibres are particularly preferred.

10. Moulding compositions according to one or more of the preceding claims comprising one or more organic or inorganic metal compound, metal salt and/or metal complex.

11. Moulding compositions according to one or more of the preceding claims further comprising a further flame retardant or further flame retardants.

12. Moulded articles produced from moulding compositions according to one or more of the preceding claims.

## Revendications

1. Phosphore rouge en forme de particules, microencapsulé, **caractérisé en ce que** la paroi de la capsule est constituée par une enveloppe en résine d'urée-formaldéhyde et en dioxyde de silicium.

2. Phosphore rouge microencapsulé selon la revendication 1, **caractérisé en ce que** la proportion pondérale de la paroi de la capsule représente 1 à 50% en poids par rapport à la somme pondérale du phosphore et de la paroi de la capsule.

3. Phosphore rouge microencapsulé selon la revendication 2, **caractérisé en ce que** le rapport pondéral de la résine d'urée-formaldéhyde à dioxyde de silicium dans la paroi de la capsule est de 95 : 5 à 5 : 95.

4. Phosphore rouge microencapsulé selon la revendication 1 à 3, **caractérisé en ce que** la résine d'urée-formaldéhyde est élaborée à partir des composants urée, formaldéhyde, résorcinol et hexaméthylènetétramine.

5. Phosphore rouge microencapsulé selon la revendication 1 à 4, **caractérisé en ce que** la paroi de la capsule contient un pigment blanc.

6. Procédé pour la préparation de phosphore rouge microencapsulé selon l'une ou plusieurs des revendications précédentes pour le microencapsulage de phosphore rouge en suspension aqueuse, dans lequel on produit, dans une réaction dans un pot, la résine d'urée-formaldéhyde et le dioxyde de silicium à partir de précurseurs solubles dans l'eau en présence de phosphore rouge dispersé dans l'eau par une diminution du pH.

7. Utilisation du phosphore rouge microencapsulé selon l'une ou plusieurs des revendications précédentes comme agent retardateur de flamme dans les matériaux synthétiques et les mélanges de matériaux synthétiques, les matériaux synthétiques thermoplastiques étant préférés.

8. Masses façonnées contenant du phosphore rouge microencapsulé selon l'une ou plusieurs des revendications précédentes.

9. Masses façonnées selon l'une ou plusieurs des revendications précédentes, contenant une ou plusieurs charges telles que les fibres de verre et/ou le talc, les fibres de verre étant particulièrement préférées.

10. Masses façonnées selon l'une ou plusieurs des revendications précédentes, contenant un ou plusieurs composés métalliques, sels métalliques et/ou complexes métalliques inorganiques ou organiques.

11. Masses façonnées selon l'une ou plusieurs des revendications précédentes, contenant un autre/d'autres agents retardateurs de flammes.

12. Corps façonnés préparés à partir des masses façonnées selon l'une ou plusieurs des revendications précédentes.
